(19) Europäisches Patentamt / European Patent Office / Office européen des brevets

(11) **EP 3 802 653 B1**

(12) **EUROPÄISCHE PATENTSCHRIFT**

(45) Veröffentlichungstag und Bekanntmachung des Hinweises auf die Patenterteilung:
**22.01.2025 Patentblatt 2025/04**

(21) Anmeldenummer: **19727903.7**

(22) Anmeldetag: **05.06.2019**

(51) Internationale Patentklassifikation (IPC):
*C08G 18/48* (2006.01)   *C08G 18/66* (2006.01)
*C08G 18/76* (2006.01)   *C08G 18/08* (2006.01)
*C08G 18/32* (2006.01)

(52) Gemeinsame Patentklassifikation (CPC):
**C08G 18/4854; C08G 18/0895; C08G 18/3206; C08G 18/4808; C08G 18/6674; C08G 18/7671**

(86) Internationale Anmeldenummer:
**PCT/EP2019/064694**

(87) Internationale Veröffentlichungsnummer:
**WO 2019/234117 (12.12.2019 Gazette 2019/50)**

(54) **SKISCHUHE MIT TEMPERATURUNABHÄNGIGEM E-MODUL**

SKI BOOT WITH TEMPERATURE-INSENSITIVE E-MODULUS

CHAUSSURE DE SKI À E-MODULE INDÉPENDANT DE LA TEMPÉRATURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2018 EP 18176321**

(43) Veröffentlichungstag der Anmeldung:
**14.04.2021 Patentblatt 2021/15**

(73) Patentinhaber: **BASF SE**
**67056 Ludwigshafen am Rhein (DE)**

(72) Erfinder:
• **HENZE, Oliver Steffen**
  **49448 Lemfoerde (DE)**
• **BOUVIER, Denis**
  **69432 Lyon Cedex 03 (FR)**
• **WETTACH, Henning**
  **67056 Ludwigshafen am Rhein (DE)**
• **LAMMERS, Fin**
  **49448 Lemfoerde (DE)**

(74) Vertreter: **BASF IP Association**
**BASF SE**
**GBI - Z078**
**67056 Ludwigshafen (DE)**

(56) Entgegenhaltungen:
WO-A1-2006/029853      WO-A1-2007/118827
WO-A1-2015/064140      WO-A1-2017/079188
WO-A1-2017/144502

EP 3 802 653 B1

**Beschreibung**

Die vorliegende Erfindung betrifft die Verwendung eines thermoplastischen Polyurethan (TPU-1) erhalten oder erhältlich durch Umsetzung einer Isocyanatzusammensetzung (IZ) enthaltend MDI mit einer Polyolzusammensetzung (PZ), wobei die Polyolzusammensetzung (PZ) mindestens ein Polyol (P1) und einen Kettenverlängerer (KV1) enthält, wobei das Polyol (P1) ausgewählt ist aus Polytetrahydrofuranen mit einem mittleren Molekulargewicht Mn im Bereich von 1300 bis 1700 g/mol und der Kettenverlängerer (KV1) ausgewählt ist aus der Gruppe bestehend aus 1,3-Propandiol, 1,4-Butandiol und 1,6-Hexandiol für die Herstellung von Skischuhen oder Teilen von Skischuhen. Des weiteren bezieht sich die Erfindung auf Skischuhe, bevorzugt Skistiefel, besonders bevorzugt die äußere Schale eines Skistiefels, basierend auf einem derartigen thermoplastischem Polyurethan sowie Verfahren zur Herstellung von Skischuhen.

Die Herstellung von Skischuhen, beispielsweise Skistiefeln, insbesondere die äußeren, harten Schalen von Skistiefeln mittels Spritzguss aus thermoplastischen Kunststoffen ist allgemein bekannt.

So offenbart WO 2007/118827A1 Skischuhe basierend auf thermoplastischem Polyurethan erhältlich durch Umsetzung von Isocyanaten mit gegenüber Isocyanaten reaktiven Verbindungen mit einem Molekulargewicht (Mw) zwischen 500 und 10000 g/mol und Kettenverlängerungsmitteln mit einem Molekulargewicht zwischen 50 und 499 g/mol, wobei als Kettenverlängerer ein Gemisch darstellt mit einem Hauptkettenverlängerer und einem oder mehreren Cokettenverlängerern eingesetzt wird.

Thermoplastische Polyurethane, beispielsweise auch erhalten durch Umsetzung von MDI und Polyolzusammensetzungen enthaltend Polytetrahydrofurane und Kettenverlängerer, werden beispielsweise auch in der WO 2017/079188 A1, WO 2015/064140 A1, WO 2017/144502 A1 oder WO 2006/029853 A1 offenbart.

Es besteht ein Bedarf, für Skistiefelentwicklungen vor allem das Gesamtgewicht des Skistiefels zu reduzieren. Dabei wird häufig die Wanddicke der äußeren Schale der Skistiefel reduziert.

Das Anforderungsprofil für thermoplastisches Polyurethan, das geeignet ist zur Herstellung von solchen Skistiefeln, insbesondere deren äußere Schale, ist komplex. Zum einen sollten die Tieftemperatureigenschaften sehr gut sein, d.h. das Material sollte unter den Anwendungstemperaturen eine ausreichende Flexibilität aufweisen und nicht brechen oder splittern. Zum anderen muss das Material eine sehr hohe Steifigkeit aufweisen, damit auch bei geringen Wanddicken eine ausreichende Steifigkeit des Skistiefels erreicht werden kann. Vorteilhaft ist weiterhin, wenn sich die Steifigkeit über den Temperaturbereich von -30-20°C möglichst wenig ändert, da so das Fahrverhalten des Skistiefels temperaturunabhängig ist.

Die aus dem Stand der Technik bekannten Materialien erfüllen die Anforderungen nur unzureichend. Eine der vorliegenden Erfindung zugrundeliegende Aufgabe war es daher, thermoplastische Polyurethane zur Herstellung von Skistiefeln zu entwickeln, die eine sehr hohe Steifigkeit mit ausgezeichneten Tieftemperatureigenschaften vereinen.

Erfindungsgemäß wird diese Aufgabe gelöst durch , ein Verfahren zur Herstellung eines Skischuhs oder eines Teils eines Skischuhs, umfassend die Schritte

(i) Bereitstellen eines thermoplastischen Polyurethans (TPU-1) erhalten oder erhältlich durch Umsetzung einer Isocyanatzusammensetzung (IZ) enthaltend MDI mit einer Polyolzusammensetzung (PZ),

wobei die Polyolzusammensetzung (PZ) mindestens ein Polyol (P1) und einen Kettenverlängerer (KV1) enthält, wobei das Polyol (P1) ausgewählt ist aus Polytetrahydrofuranen mit einem mittleren Molekulargewicht Mn im Bereich von 1300 bis 1700 g/mol und der Kettenverlängerer (KV1) ausgewählt ist aus der Gruppe bestehend aus 1,3-Propandiol, 1,4-Butandiol und 1,6-Hexandiol;

(ii) Herstellung eines Skischuhs oder eines Teils eines Skischuh aus dem thermoplastischen Polyurethan (TPU-1),

wobei das thermoplastische Polyurethan einen Hartphasenanteil von grösser 0,40 aufweist, wobei der Hartphasenanteil durch folgende Formel definiert ist:

$$Hartphasenanteil = \left\{ \sum_{x=1}^{x} \left[ (m_{KVx} / M_{KVx}) * M_{Iso} + m_{KVx} \right] \right\} / m_{ges}$$

mit den folgenden Bedeutungen:

$M_{KVx}$: Molare Masse der Kettenverlängerers x in g/mol
$m_{KVx}$: Masse des Kettenverlängerers x in g
$M_{Iso}$: Molare Masse des verwendeten Isocyanates in g/mol
$m_{ges}$: Gesamtmasse aller Ausgangsstoffe in g
x: Anzahl der Kettenverlängerer.

Überraschend wurde gefunden, dass durch die Kombination der eingesetzten Isocyanatkomponente und Polyolkomponente thermoplastische Polyurethane mit einem Eigenschaftsprofil erhalten werden, die für die Herstellung von Skistiefeln besonders geeignet sind. So weisen die thermoplastischen Polyurethane gute Tieftemperatureigenschaften und typischerweise ein E-Modul von grösser 200 MPa auf.

Erfindungsgemäß wird die Isocyanatzusammensetzung (IZ) enthaltend MDI mit einer Polyolzusammensetzung (PZ) umgesetzt, die mindestens ein Polyol (P1) und einen Kettenverlängerer (KV1) enthält. Dabei kann die Polyolzusammensetzung (PZ) im Rahmen der vorliegenden Erfindung weitere Polyole oder weitere Kettenverlängerer enthalten. Auch die Isocyanatzusammensetzung (IZ) kann neben MDI weitere Isocyanate enthalten.

Thermoplastische Polyurethane sind grundsätzlich bekannt. Die Herstellung erfolgt üblicherweise durch Umsetzung von Isocyanaten und gegenüber Isocyanaten reaktiven Verbindungen und gegebenenfalls Kettenverlängerungsmittel gegebenenfalls in Gegenwart von mindestens einem Katalysator und/oder üblichen Hilfsstoffen und/oder Zusatzstoffen. Isocyanate, gegenüber Isocyanaten reaktive Verbindungen und Kettenverlängerungsmittel werden einzeln oder zusammen auch als Aufbaukomponenten angesprochen.

Erfindungsgemäß enthält die Polyolkomponente mindestens das Polyol (P1) als gegenüber Isocyanaten reaktive Verbindung. Im Rahmen der vorliegenden Erfindung ist das Polyol (P1) ausgewählt aus Polytetrahydrofuranen mit einem mittleren Molekulargewicht Mn im Bereich von 1300 bis 1700 g/mol, weiter bevorzugt aus Polytetrahydrofuranen mit einem mittleren Molekulargewicht Mn im Bereich von 1400 bis 1600 g/mol, beispielsweise im Bereich von 1400 bis 1500 g/mol.

Überraschend hat sich gezeigt, dass die erfindungsgemäßen Zusammensetzungen insbesondere für die Anwendung zur Herstellung von Skistiefeln eine ausreichende Härte aufweisen und trotz des Molekulargewichts der eingesetzten Polyole gut einfärbbar sind.

Die Polyolkomponente kann jedoch im Rahmen der vorliegenden Erfindung auch weitere gegenüber Isocyanaten reaktive Verbindungen enthalten.

Als weitere gegenüber Isocyanaten reaktive Verbindungen können prinzipiell alle geeigneten dem Fachmann bekannten Verbindungen eingesetzt werden. Dabei können im Rahmen der vorliegenden Erfindung alle geeigneten Diole eingesetzt werden, beispielsweise weitere Polyetherdiole.

Der Kettenverlängerer (KV1) ist im Rahmen der vorliegenden Erfindung ausgewählt aus der Gruppe bestehend aus 1,3-Propandiol, 1,4-Butandiol und 1,6-Hexandiol. Erfindungsgemäß können auch zwei oder mehr Kettenverlängerer eingesetzt werden, beispielsweise Mischungen aus 1,4-Butandiol und einem weiteren Kettenverlängerer. Bevorzugt wird im Rahmen der vorliegenden Erfindung nur ein Kettenverlängerer (KV1) eingesetzt.

Im Rahmen der vorliegenden Erfindung wird vorzugsweise 1,4-Butandiol als Kettenverlängerer eingesetzt. Gemäß einer weiteren Ausführungsform betrifft die vorliegende Erfindung daher ein thermoplastisches Polyurethan wie zuvor beschrieben, wobei der Kettenverlängerer (KV1) 1,4-Butandiol ist.

Im Rahmen der vorliegenden Erfindung wird bei der Herstellung des thermoplastischen Polyurethans (TPU-1) die Isocyanatzusammensetzung (IZ) enthaltend MDI eingesetzt.

Erfindungsgemäß können 2,2'-, 2,4'- und/oder 4,4'-Diphenylmethandiisocyanat (MDI) eingesetzt werden. Besonders bevorzugt wird nur 4,4'-MDI eingesetzt.

Gemäß einer weiteren Ausführungsform betrifft die vorliegende Erfindung daher eine Zusammensetzung wie zuvor beschrieben, wobei das thermoplastische Polyurethan auf 4,4'-Diphenylmethandiisocyanat basiert.

Das erfindungsgemäße thermoplastische Polyurethan des Skischuhs weist einen Hartphasenanteil von grösser 0,4, besonders bevorzugt grösser 0,5 auf. Demgemäß betrifft die vorliegende Erfindung daher ein Verfahren wie zuvor beschrieben, wobei das thermoplastische Polyurethan einen Hartphasenanteil von grösser 0,40 aufweist, wobei der Hartphasenanteil durch folgende Formel definiert ist:

$$Hartphasenanteil = \{\sum_{x=1}^{x}[(m_{KVx}/M_{KVx})*M_{Iso}+m_{KVx}]\}/m_{ges}$$

mit den folgenden Bedeutungen:

$M_{KVx}$: Molare Masse der Kettenverlängerers x in g/mol
$m_{KVx}$: Masse des Kettenverlängerers x in g
$M_{Iso}$: Molare Masse des verwendeten Isocyanats in g/mol
$m_{ges}$: Gesamtmasse aller Ausgangsstoffe in g
x: Anzahl der Kettenverlängerer.

Die erfindungsgemäß eingesetzten thermoplastischen Polyurethane weisen vorzugsweise ein E-Modul im Bereich von 400 bis 1100 MPa auf, weiter bevorzugt im Bereich von 800 bis 1050 MPa, besonders bevorzugt im Bereich von 900 bis 1000 MPa.

Die erfindungsgemäß eingesetzten thermoplastischen Polyurethane weisen gute Tieftemperatureigenschaften auf. Diese können beispielsweise charakterisiert werden durch die Charpy-Kerbschlagzähigkeit bei - 30°C.

Gemäß einer anderen Ausführungsform betrifft die vorliegende Erfindung auch einen Skischuh oder Teil eines Skischuhs, wobei das thermoplastische Polyurethan (TPU-1) eine Charpy-Kerbschlagzähigkeit bei - 30°C nach DIN EN ISO 179- 1/1 eA von grösser als 10 kJ/m$^2$ aufweist, bevorzugt von grösser als 20 kJ/m$^2$, weiter bevorzugt von grösser als 30 kJ/m$^2$. Beispielsweise kann im Rahmen der vorliegenden Erfindung das thermoplastische Polyurethan ein E-Modul von 400MPa und eine Kerbschlagzähigkeit bei -30°C im Bereich von 100kJ/m$^2$ aufweisen oder auch bei einem E-Modul von 1000MPa eine Kerbschlagzähigkeit bei -30°C von etwa 35kJ/m$^2$. Ebenso ist es im Rahmen der vorliegenden Erfindung möglich, dass das thermoplastische Polyurethan ein E-Modul von 1000MPa eine Kerbschlagzähigkeit von 10-20kJ/m$^2$ aufweist.

Zur Einstellung von Härte der TPUs können die Aufbaukomponenten in relativ breiten molaren Verhältnissen variiert werden. Bewährt haben sich beispielsweise molare Verhältnisse von Polyolen zu insgesamt einzusetzenden Kettenverlängerungsmitteln von 1 : 1 bis 1 : 15, bevorzugt von 1 : 4 bis 1: 12, insbesondere von 1 : 5 bis 1 : 10, weiter bevorzugt von 1 : 5 bis 1 : 8, wobei die Härte der TPU mit zunehmendem Gehalt an Kettenverlängerer ansteigt.

Die Umsetzung kann bei üblichen Kennzahlen erfolgen, bevorzugt bei einer Kennzahl zwischen 950 und 1050, besonders bevorzugt bei einer Kennzahl zwischen 970 und 1010, insbesondere zwischen 980 und 1000, weiter bevorzugt im Bereich von 992 bis 998. Die Kennzahl ist definiert durch das Verhältnis der insgesamt bei der Umsetzung eingesetzten Isocyanatgruppen zu den gegenüber Isocyanaten reaktiven Gruppen, d. h. den aktiven Wasserstoffen. Bei einer Kennzahl von 1000 kommt auf eine Isocyanatgruppe ein aktives Wasserstoffatom, d.h. eine gegenüber Isocyanaten reaktive Funktion. Bei Kennzahlen über 1000 liegen mehr Isocyanatgruppen als OH-Gruppen vor. Die Herstellung der TPU kann nach den bekannten Verfahren kontinuierlich, beispielsweise mit Reaktionsextrudern oder dem Bandverfahren nach one-shot oder dem Prepolymerverfahren, oder diskontinuierlich nach dem bekannten Prepolymerprozess erfolgen. Bei diesen Verfahren können die zur Reaktion kommenden Komponenten nacheinander oder gleichzeitig miteinander vermischt werden, wobei die Reaktion unmittelbar einsetzt. Beim Extruderverfahren werden die Aufbaukomponenten sowie gegebenenfalls Katalysatoren und/oder weitere Hilfs- und Zusatzstoffe einzeln oder als Gemisch in den Extruder eingeführt, z. B. bei Temperaturen von 100 bis 280°C, vorzugsweise 140 bis 250°C zur Reaktion gebracht, das erhaltene TPU wird extrudiert, abgekühlt und granuliert.

Für die Herstellung von thermoplastischen Polyurethanen eingesetzte Katalysatoren und Hilfs- oder Zusatzstoffe sind dem Fachmann an sich bekannt.

Katalysatoren, welche insbesondere die Reaktion zwischen den NCO-Gruppen der Diisocyanate und den Hydroxylgruppen der gegenüber Isocyanaten reaktiven Verbindung und dem Kettenverlängerungsmittel beschleunigen, sind in einer bevorzugten Ausführungsform tertiäre Amine, insbesondere Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan, in einer anderen bevorzugten Ausführungsform sind dies organische Metallverbindungen, wie Titansäureester, Eisenverbindungen, bevorzugt Eisen-(III)-acetylacetonat, Zinnverbindungen, bevorzugt Zinndiacetat, Zinndioctoat, Zinndilaurat oder die Zinndialkylsalze aliphatischer Carbonsäuren, bevorzugt Dibutylzinndiacetat, Dibutylzinndilaurat oder Bismutsalzen, in denen Bismut bevorzugt in den Oxidationsstufen 2 oder 3 vorliegt, insbesondere 3. Bevorzugt sind Salze von Carbonsäuren. Als Carbonsäuren werden bevorzugt Carbonsäuren mit 6 bis 14 Kohlenstoffatomen, besonders bevorzugt mit 8 bis 12 Kohlenstoffatomen verwendet. Beispiele für geeignete Bismutsalze sind Bismut(III)-neodecanoat, Bismut-2-ethylhexanoat und Bismutoctanoat.

Die Katalysatoren werden bevorzugt in Mengen von 0,0001 bis 0,1 Gew.-Teilen pro 100 Gew.-Teile der mit Isocyanaten reaktiven Verbindung eingesetzt. Bevorzugt werden Zinnkatalysatoren eingesetzt, insbesondere Zinndioctoat.

Neben Katalysatoren können auch übliche Hilfsstoffe eingesetzt werden. Genannt seien beispielsweise oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Geeignete Herstellungsverfahren für thermoplastische Polyurethane werden beispielsweise offenbart in EP 0 922 552 A1, DE 101 03 424 A1 oder WO 2006/072461 A1. Die Herstellung erfolgt üblicherweise auf einer Bandanlage oder einem Reaktionsextruder, kann aber auch im Labormaßstab, beispielsweise im Handgussverfahren, erfolgen. In Abhängigkeit der stofflichen Eigenschaften der Komponenten werden diese alle unmittelbar miteinander vermischt oder es werden einzelne Komponenten vorvermischt und/oder vorreagiert, z.B. zu Präpolymeren, und dann erst zur Polyaddition gebracht. In einer weiteren Ausführungsform wird zunächst ein thermoplastisches Polyurethan aus den Aufbaukomponenten, ggf. mit Katalysator hergestellt, in das ggf. noch Hilfsstoffe eingearbeitet sein können. Das homogene Verteilen erfolgt vorzugsweise in einem Extruder, bevorzugt in einem Zweiwellenextruder.

Zur Herstellung der erfindungsgemäß eingesetzten thermoplastischen Polyurethane werden die Aufbaukomponenten bevorzugt in Gegenwart von Katalysatoren und gegebenenfalls Hilfsmitteln und/oder Zusatzstoffen üblicherweise in solchen Mengen zur Reaktion gebracht, dass das Äquivalenzverhältnis von NCO-Gruppen der Diisocyanate zur Summe der Hydroxylgruppen der eingesetzten Komponenten 0,95 bis 1,05 : 1, vorzugsweise 0,98 bis 1,00 : 1, weiter bevorzugt 0,992 bis 0,998 : 1 beträgt.

Vorzugsweise werden erfindungsgemäß thermoplastische Polyurethane hergestellt, bei denen das thermoplastische Polyurethan ein mittleres Molekulargewicht ($M_W$) im Bereich von 50000 bis 200000 Dalton, bevorzugt im Bereich von 80000 bis 120000 Dalton aufweist. Die Obergrenze für das mittlere Molekulargewicht ($M_W$) der thermoplastischen Polyurethane wird in aller Regel durch die Verarbeitbarkeit, wie auch das gewünschte Eigenschaftsspektrum bestimmt.

Es hat sich überraschend gezeigt, dass die erfindungsgemäß eingesetzten Zusammensetzungen durch die Kombination der erfindungsgemäßen Komponenten ein optimiertes Eigenschaftsprofil aufweisen, insbesondere für die Anwendung zur Herstellung von Skischuhen oder Teilen von Skischuhen. Insbesondere hat sich überraschend gezeigt, dass sich das E-Modul über die Temperatur wenig ändert. Das ist von Vorteil, da die Skistiefel dann bei unterschiedlichen Temperaturen jeweils die gleiche Steifigkeit aufweisen.

Die vorliegende Erfindung betrifft ein Verfahren zur Herstellung eines Skischuhs oder eines Teils eines Skischuhs, umfassend die Schritte

(i) Bereitstellen eines thermoplastischen Polyurethans (TPU-1) erhalten oder erhältlich durch Umsetzung einer Isocyanatzusammensetzung (IZ) enthaltend MDI mit einer Polyolzusammensetzung (PZ),

wobei die Polyolzusammensetzung (PZ) mindestens ein Polyol (P1) und einen Kettenverlängerer (KV1) enthält, wobei das Polyol (P1) ausgewählt ist aus Polytetrahydrofuranen mit einem mittleren Molekulargewicht Mn im Bereich von 1200 bis 2000 g/mol und der Kettenverlängerer (KV1) ausgewählt ist aus der Gruppe bestehend aus 1,3-Propandiol, 1,4-Butandiol und 1,6-Hexandiol;

(ii) Herstellung eines Skischuhs oder eines Teils eines Skischuhs aus dem thermoplastischen Polyurethan (TPU-1), wobei das thermoplastische Polyurethan einen Hartphasenanteil von grösser 0,40 aufweist, wobei der Hartphasenanteil durch folgende Formel definiert ist:

$$Hartphasenanteil = \{\sum_{x=1}^{x}[(m_{KVx}/M_{KVx})*M_{Iso}+m_{KVx}]\}/m_{ges}$$

mit den folgenden Bedeutungen:

$M_{KVx}$: Molare Masse der Kettenverlängerers x in g/mol
$m_{KVx}$: Masse des Kettenverlängerers x in g
$M_{Iso}$: Molare Masse des verwendeten Isocyanates in g/mol
$m_{ges}$: Gesamtmasse aller Ausgangsstoffe in g
x: Anzahl der Kettenverlängerer.

Die Herstellung gemäß Schritt (ii) kann mit an sich üblichen Verfahren erfolgen, vorzugsweise mittels Spritzguss. Demgemäß betrifft die vorliegende Erfindung gemäß einer weiteren Ausführungsform auch ein Verfahren wie zuvor beschrieben, wobei das thermoplastische Polyurethan (TPU-1) gemäß Schritt (ii) mittels Spritzguss verarbeitet wird.

Weiterhin betrifft die vorliegende Erfindung auch die Verwendung eines thermoplastischen Polyurethans (TPU-1) erhalten oder erhältlich durch Umsetzung einer Isocyanatzusammensetzung (IZ) enthaltend MDI mit einer Polyolzusammensetzung (PZ), für die Herstellung von Skischuhen oder Teilen von Skischuhen, wobei die Polyolzusammensetzung (PZ) mindestens ein Polyol (P1) und einen Kettenverlängerer (KV1) enthält, wobei das Polyol (P1) ausgewählt ist aus Polytetrahydrofuranen mit einem mittleren Molekulargewicht Mn im Bereich von 1200 bis 2000 g/mol und der Kettenverlängerer (KV1) ausgewählt ist aus der Gruppe bestehend aus 1,3-Propandiol, 1,4-Butandiol und 1,6-Hexandiol, wobei das thermoplastische Polyurethan einen Hartphasenanteil von grösser 0,40 aufweist, wobei der Hartphasenanteil durch folgende Formel definiert ist:

$$Hartphasenanteil = \{\sum_{x=1}^{x}[(m_{KVx}/M_{KVx})*M_{Iso}+m_{KVx}]\}/m_{ges}$$

mit den folgenden Bedeutungen:

$M_{KVx}$:    Molare Masse der Kettenverlängerers x in g/mol

$m_{KVx}$:    Masse des Kettenverlängerers x in g

$M_{Iso}$:    Molare Masse des verwendeten Isocyanates in g/mol

$m_{ges}$:    Gesamtmasse aller Ausgangsstoffe in g

x:    Anzahl der Kettenverlängerer...

Bezüglich der bevorzugten Ausführungsformen wird auf die obigen Ausführungen zu den bevorzugt eingesetzten Komponenten Bezug genommen.

Des Weiteren bezieht sich die Erfindung auf Skischuhe, bevorzugt Skistiefel, besonders bevorzugt äußere Schale eines Skistiefels, basierend auf dem oben beschriebenen thermoplastischen Polyurethan. Außerdem betrifft die Erfindung Verfahren zur Herstellung von Skischuhen, bevorzugt Skistiefel, besonders bevorzugt äußere Schale eines Skistiefels, wobei man das erfindungsgemäße thermoplastische Polyurethan mittels Spritzguss zum Skischuh, bevorzugt Skistiefel, besonders bevorzugt äußere Schale eines Skistiefels verarbeitet. Verwendung finden die erfindungsgemäßen thermoplastischen Polyurethane zur Herstellung von Skischuhen, bevorzugt Skistiefeln, insbesondere Außenschalen von Skistiefeln, Skistiefelabsätze, Manschetten für den Skistiefelschaft und Dekorelemente. Die Herstellung dieser Produkte mittels üblicher Spritzguss-Verfahren ist allgemein bekannt.

Demgemäß betrifft die vorliegende Erfindung gemäß einem weiteren Aspekt auch einen Skischuh oder Teil eines Skischuhs erhalten oder erhältlich gemäß einem Verfahren wie zuvor beschrieben. Gemäß bevorzugter Ausführungsformen wird auf die obigen Ausführungen Bezug genommen.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahrens bzw. der erfindungsgemäßen Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst, auch wenn diese Kombination nicht ausdrücklich erwähnt wird.

Die nachfolgenden Beispiele dienen der Veranschaulichung der Erfindung, sind aber in keiner Weise einschränkend hinsichtlich des Gegenstands der vorliegenden Erfindung.

BEISPIELE

1. Beispiel 1 - Rohstoffe

| Poly PTHF® 1000: | Polytetrahydrofuran 1000, CAS-Nummer: 25190-06-1, BASF SE, 67056 Ludwigshafen, GERMANY, Unternehmensbereich Zwischenprodukte. |
|---|---|
| Poly PTHF® 2000: | Polytetrahydrofuran 2000, CAS-Nummer: 25190-06-1, BASF SE, 67056 Ludwigshafen, GERMANY, Unternehmensbereich Zwischenprodukte. |
| 1,4-Butandiol: | Butan-1,4-diol, CAS-Nummer: 110-63-4, BASF SE, 67056 Ludwigshafen, GERMANY, Unternehmensbereich Zwischenprodukte. |
| Lupranat MET: | 4,4'-Methylendiphenyldiisocyanat, CAS-Nummer: 101-68-8, BASF SE, 67056 Ludwigshafen, GERMANY |
| Farbmasterbatch 1: | Elastollan Konz 315 F (Rot), BASF Polyurethanes GmbH, Elastogranstrasse 60, 49448 Lemförde |
| Farbmasterbatch 2: | Elastollan Konz 530/1 (Blau), BASF Polyurethanes GmbH, Elastogranstrasse 60, 49448 Lemförde |

2. Beispiel 2 - Herstellung der Materialien

Die Materialien A-N wurden mit einem Doppelwellenextruder Typ ZSK 58 der Firma Werner und Pfleiderer Stuttgart mit einer Verfahrensteillänge von 48 D, unterteilt in 12 Gehäuse hergestellt. Die Granulierung erfolgte mittels einer üblichen Unterwassergranuliereinrichtung der Firma Gala (UWG). Die Rezepturen der einzelnen Materialien sind in Tabelle 1 zusammengestellt.

TPU Materialien mit mittleren Molgewichten der Polyolkomponente größer als 2000 Dalton waren nicht herstellbar.

3. Bestimmung der Eigenschaften

Die mechanischen Eigenschaften wurden an Spritzkörpern bestimmt. Die Dichte wurde nach DIN EN ISO 1183-1 (A), die Härte nach DIN 53505, die Zugfestigkeit, die Reißdehnung sowie die E-Module nach DIN EN ISO 527, die Weiterreißfestigkeit nach DIN ISO 34-1, B (b), die Kerbschlagzähigkeiten nach der DIN EN ISO 179-1/1eA und der Abrieb nach der DIN 53516 bestimmt.

Die Eigenschaften der einzelnen Materialien sind in Tabelle 1 zusammengestellt.

4. Kerbschlagzähigkeiten bei niedrigen Temperaturen.

Die erfindungsgemäßen Beispiele (EB) in Tabelle 1 illustrieren, dass bei Verwendung eines PTHF mit mittleren Molgewichten im Bereich von 1400-1700 Materialien mit hoher Schlagzähigkeit bei tiefen Temperaturen erhalten werden. Dabei sollten Materialien mit etwa gleicher Steifigkeit bei 20°C miteinander verglichen werden.

So wird beispielsweise für das erfindungsgemäße Material J bei -30°C eine Kerbschlagzähigkeit von 117 kJ/m$^2$ gemessen, während für das nicht erfindungsgemäße Material K bei -30°C eine Kerbschlagzähigkeit von 8 kJ/m$^2$ bestimmt wird.

Analog können beispielsweise die erfindungsgemäßen Materialien A und E mit dem nicht erfindungsgemäßen Material D verglichen werden. Für das Material A wird bei -30°C eine Kerbschlagzähigkeit von 120 kJ/m$^2$ gemessen, während für das nicht erfindungsgemäße Material D eine Kerbschlagzähigkeit bei -30°C von 9 kJ/m$^2$ bestimmt wird. Für das Material A wird bei -20°C eine Kerbschlagzähigkeit von 110 kJ/m$^2$ gemessen, während für das nicht erfindungsgemäße Material D eine Kerbschlagzähigkeit bei -20°C von 15 kJ/m$^2$ bestimmt wird.

Weiterhin zeigen die Beispiele D bis I, alle mit einem Hartphasenanteil von 53%, dass die Kerbschlagzähigkeit bei -30°C für die erfindungsgemäßen Materialien (E-I) mit mittleren Molgewichten für das PTHF im Bereich von 1400-1700 stets oberhalb von 20 kJ/m$^2$ liegen. Das nicht erfindungsgemäße Beispiel D liegt trotz viel geringeren E-Moduls bei 20°C bei den Kerbschlagzähigkeiten bei -30°C deutlich unterhalb 20 kJ/m$^2$.

5. Versteifung bei niedrigen Temperaturen

Die erfindungsgemäßen Beispiele (EB) in Tabelle 1 illustrieren, dass bei Verwendung eines PTHF mit mittleren Molgewichten im Bereich von 1400-1700 Materialien erhalten werden, deren Steifigkeit (E-modul) bei niedrigen Temperaturen nur moderat zunimmt. Dabei sollten Materialien mit etwa gleicher Steifigkeit bei 20°C miteinander verglichen werden.

So wird beispielsweise für das erfindungsgemäße Material J von 20°C bis -30°C ein Anstieg des E-Moduls auf 180% registriert, während für das nicht erfindungsgemäße Material K ein Anstieg auf 340% bestimmt wird.

Analog kann beispielsweise das erfindungsgemäße Material A mit dem nicht erfindungsgemäßen Material D verglichen werden. Für das erfindungsgemäße Material A wird von 20°C bis -30°C ein Anstieg des E-Moduls von 260% gefunden, während für das nicht erfindungsgemäße Material D ein Anstieg des E-Moduls auf 660% bestimmt wird.

Tabelle 1a: Rezepturen und Eigenschaften der Materialien A-G

| Material | A | B | C | D | E | F | G |
|---|---|---|---|---|---|---|---|
| EB-erfindungsgem. Bsp./VB-Vergleichsbeispiel | EB | EB | EB | VB | EB | EB | EB |
| HS Anteil [%] | 47 | 49 | 51 | 53 | 53 | 53 | 53 |
| Mittleres Molgewicht PTHF [Dalton] | 1700 | 1700 | 1700 | 1000 | 1200 | 1400 | 1500 |
| | | | | | | | |
| Poly THF 2000 OHZ:56,1 [g] | 37,64 | 36,16 | 34,76 | 0 | 12,83 | 22,52 | 26,54 |
| PolyTHF 1000 OHZ:112,2 [g] | 8,06 | 7,74 | 7,44 | 37,09 | 25,58 | 16,85 | 13,24 |
| Lupranat MET [g] | 40,9 | 42,15 | 43,34 | 47,94 | 46,62 | 45,64 | 45,23 |
| Butandiol,1,4 [g] | 12,31 | 12,85 | 13,37 | 13,87 | 13,87 | 13,89 | 13,89 |
| | | | | | | | |
| Dichte [g/cm3] | 1,14 | 1,14 | 1,15 | 1,17 | 1,16 | 1,16 | 1,16 |
| Härte [Shore D] | 53 | 54 | 57 | 59 | 59 | 60 | 60 |
| Zugfestigkeit [MPa] | 37 | 42 | 43 | 57 | 42 | 49 | 41 |

(fortgesetzt)

| Material | A | B | C | D | E | F | G |
|---|---|---|---|---|---|---|---|
| Reißdehnung [%] | 370 | 370 | 380 | 430 | 360 | 370 | 330 |
| Weiterreißfestigkeit [kN/m] | 96 | 107 | 114 | 171 | 176 | 171 | 168 |
| Abrieb [mm³] | 40 | 40 | 43 | 32 | 51 | 58 | 50 |
| | | | | | | | |
| E-Modul bei 20°C [MPa] | 281 | 382 | 435 | 205 | 353 | 528 | 591 |
| E-Modul bei 0°C [MPa] | 395 | 514 | 587 | 438 | 556 | 870 | 807 |
| E-Modul bei -10°C [MPa] | 477 | 586 | 680 | 608 | 758 | 954 | 902 |
| E-Modul bei -20°C [MPa] | 571 | 712 | 809 | 922 | 1169 | 1191 | 1134 |
| E-Modul bei -30°C [MPa] | 736 | 885 | 1064 | 1345 | 1301 | 1334 | 1260 |
| Prozentualer Anstieg des E-Moduls von Raumtemperatur auf -30°C. | 262 | 231 | 244 | 656 | 368 | 253 | 213 |
| Charpy-Kerbschlagzähigkeit bei -10°C [kJ/m²] | 107 | 104 | 102 | 175 | 139 | 117 | 114 |
| Charpy-Kerbschlagzähigkeit bei -20°C [kJ/m²] | 110 | 112 | 114 | 15 | 122 | 118 | 116 |
| Charpy-Kerbschlagzähigkeit bei -30°C [kJ/m²] | 120 | 120 | 124 | 9 | 25 | 113 | 121 |
| Einfärbbarkeit mit 2% Farbmasterbatch 1 (*) | 3 | 3 | 3 | 1 | 1 | 1 | 2 |
| Einfärbbarkeit mit 2% | 3 | 3 | 3 | 1 | 1 | 1 | 2 |
| Farbmasterbatch 2 (*) | | | | | | | |
| n.d. - nicht bestimmt | | | | | | | |

Tabelle 1b: Rezepturen und Eigenschaften der Materialien H-N

| Material | H | I | J | K | L | M | N |
|---|---|---|---|---|---|---|---|
| EB-erfindungsgem. Bsp./VB-Vergleichsbeispiel | EB | EB | EB | VB | EB | EB | EB |
| HS Anteil [%] | 53 | 53 | 57 | 60,5 | 62,5 | 72 | 60,5 |
| Mittleres Molgewicht PTHF [Dalton] | 1600 | 1700 | 1700 | 1000 | 1700 | 1700 | 1400 |
| | | | | | | | |
| Poly THF 2000 OHZ:56,1 [g] | 30,13 | 33,34 | 30,54 | 0 | 26,63 | 19,83 | 18,93 |
| PolyTHF 1000 OHZ:112,2 [g] | 10,05 | 7,14 | 6,54 | 31,38 | 5,7 | 4,24 | 14,2 |
| Lupranat MET [g] | 44,84 | 44,53 | 46,9 | 52,25 | 50,2 | 55,95 | 49,92 |
| Butandiol,1,4 [g] | 13,88 | 13,89 | 14,92 | 15,99 | 16,37 | 18,88 | 15,85 |
| | | | | | | | |
| Dichte [g/cm3] | 1,15 | 1,15 | 1,16 | 1,20 | 1,18 | 1,20 | n.d. |
| Härte [Shore D] | 58 | 57 | 62 | 75 | 66 | 74 | n.d. |
| Zugfestigkeit [MPa] | 42 | 43 | 43 | 65 | 44 | 51 | n.d. |
| Reißdehnung [%] | 330 | 360 | 310 | 380 | 260 | 180 | n.d. |
| Weiterreißfestigkeit [kN/m] | 168 | 126 | 155 | 220 | 183 | 238 | n.d. |
| Abrieb [mm³] | 48 | 47 | 52 | 22 | 75 | 113 | n.d. |
| | | | | | | | |

(fortgesetzt)

| Material | H | I | J | K | L | M | N |
|---|---|---|---|---|---|---|---|
| E-Modul bei 20°C [MPa] | 550 | 561 | 803 | 774 | 1101 | 1597 | n.d. |
| E-Modul bei 0°C [MPa] | 731 | 700 | 943 | 1370 | 1354 | 2000 | n.d. |
| E-Modul bei -10°C [MPa] | 783 | 816 | 1043 | 1841 | 1431 | 2256 | n.d. |
| E-Modul bei -20°C [MPa] | 940 | 927 | 1170 | 2171 | 1606 | 2525 | n.d. |
| E-Modul bei -30°C [MPa] | 1137 | 1286 | 1439 | 2642 | 1980 | 2835 | n.d. |
| Prozentualer Anstieg des E-Moduls von Raumtemperatur auf -30°C | 206 | 229 | 179 | 341 | 179 | 178 | n.d. |
| Charpy-Kerbschlagzähigkeit bei -10°C [kJ/m$^2$] | 105 | 105 | 114 | 9 | 91 | n.d. | n.d. |
| Charpy-Kerbschlagzähigkeit bei -20°C [kJ/m$^2$] | 107 | 118 | 122 | 9 | 82 | n.d. | n.d. |
| Charpy-Kerbschlagzähigkeit bei -30°C [kJ/m$^2$] | 119 | 123 | 117 | 8 | 31 | n.d. | n.d. |
| Einfärbbarkeit mit 2% Farbmasterbatch 1 | 3 | 3 | 5 | 1 | 5 | 5 | 1 |
| Einfärbbarkeit mit 2% Farbmasterbatch 2 | 3 | 3 | 5 | 1 | 5 | 5 | 1 |

n.d. - nicht bestimmt
(*) Beurteilung der Einfärbbarkeit:
1 - sehr gut
2 - gut
3 - befriedigend
4 - ausreichend
5 - mangelhaft

Zitierte Literatur

WO 2007/118827A1
Kunststoffhandbuch, Band VII, herausgegeben von Vieweg und Höchtlen, Carl Hanser Verlag, München 1966 (S. 103-113)
EP 0 922 552 A1
DE 101 03 424 A1
WO 2006/072461 A1

**Patentansprüche**

1.  Verfahren zur Herstellung eines Skischuhs oder eines Teils eines Skischuhs, umfassend die Schritte

    (i) Bereitstellen eines thermoplastischen Polyurethans (TPU-1) erhalten oder erhältlich durch Umsetzung einer Isocyanatzusammensetzung (IZ) enthaltend MDI mit einer Polyolzusammensetzung (PZ),

    wobei die Polyolzusammensetzung (PZ) mindestens ein Polyol (P1) und einen Kettenverlängerer (KV1) enthält,
    wobei das Polyol (P1) ausgewählt ist aus Polytetrahydrofuranen mit einem mittleren Molekulargewicht Mn im Bereich von 1300 bis 1700 g/mol und der Kettenverlängerer (KV1) ausgewählt ist aus der Gruppe bestehend aus 1,3-Propandiol, 1,4-Butandiol und 1,6-Hexandiol;

    (ii) Herstellung eines Skischuhs oder eines Teils eines Skischuh aus dem thermoplastischen Polyurethan (TPU-1),

    wobei das thermoplastische Polyurethan einen Hartphasenanteil von grösser 0,40 aufweist, wobei der Hartphasenanteil durch folgende Formel definiert ist:

$$Hartphasenanteil = \{\sum_{x=1}^{x}[(m_{KVx}/M_{KVx})*M_{Iso}+m_{KVx}]\}/m_{ges}$$

mit den folgenden Bedeutungen:

$M_{KVx}$: Molare Masse der Kettenverlängerers x in g/mol
$m_{KVx}$: Masse des Kettenverlängerers x in g
$M_{Iso}$: Molare Masse des verwendeten Isocyanates in g/mol
$m_{ges}$: Gesamtmasse aller Ausgangsstoffe in g
x: Anzahl der Kettenverlängerer..

2.  Verfahren gemäß Anspruch 1, wobei das thermoplastische Polyurethan (TPU-1) gemäß Schritt (ii) mittels Spritzguss verarbeitet wird.

3.  Verfahren gemäß einem der Ansprüche 1 bis 2, wobei der Kettenverlängerer (KV1) 1,4-Butandiol ist.

4.  Skischuh oder Teil eines Skischuhs erhalten oder erhältlich gemäß einem Verfahren gemäß einem der Ansprüche 1 bis 3.

5.  Skischuh oder Teil eines Skischuhs gemäß Anspruch 4, wobei das thermoplastische Polyurethan eine Charpy-Kerbschlagzähigkeit bei - 30°C nach DIN EN ISO 179- 1/1 eA von grösser als 10 kJ/m$^2$ aufweist.

6.  Verwendung eines thermoplastischen Polyurethans (TPU-1) erhalten oder erhältlich durch Umsetzung einer Isocyanatzusammensetzung (IZ) enthaltend MDI mit einer Polyolzusammensetzung (PZ), für die Herstellung von Skischuhen oder Teilen von Skischuhen,

    wobei die Polyolzusammensetzung (PZ) mindestens ein Polyol (P1) und einen Kettenverlängerer (KV1) enthält, wobei das Polyol (P1) ausgewählt ist aus Polytetrahydrofuranen mit einem mittleren Molekulargewicht Mn im Bereich von 1300 bis 1700 g/mol und der Kettenverlängerer (KV1) ausgewählt ist aus der Gruppe bestehend aus 1,3-Propandiol, 1,4-Butandiol und 1,6-Hexandiol, und
    wobei das thermoplastische Polyurethan einen Hartphasenanteil von grösser 0,40 aufweist, wobei der Hartphasenanteil durch folgende Formel definiert ist:

$$Hartphasenanteil = \{\sum_{x=1}^{x}[(m_{KVx}/M_{KVx})*M_{Iso}+m_{KVx}]\}/m_{ges}$$

mit den folgenden Bedeutungen:

$M_{KVx}$: Molare Masse der Kettenverlängerers x in g/mol
$m_{KVx}$: Masse des Kettenverlängerers x in g
$M_{Iso}$: Molare Masse des verwendeten Isocyanates in g/mol
$m_{ges}$: Gesamtmasse aller Ausgangsstoffe in g
x: Anzahl der Kettenverlängerer..

7.  Verwendung gemäß Anspruch 6, wobei der Kettenverlängerer (KV1) 1,4-Butandiol ist.

8.  Thermoplastische Polyurethan (TPU-1) erhalten oder erhältlich durch Umsetzung einer Isocyanatzusammensetzung (IZ) enthaltend MDI mit einer Polyolzusammensetzung (PZ), wobei die Polyolzusammensetzung (PZ) mindestens ein Polyol (P1) und einen Kettenverlängerer (KV1) enthält,

    wobei das Polyol (P1) ausgewählt ist aus Polytetrahydrofuranen mit einem mittleren Molekulargewicht Mn im Bereich von 1300 bis 1700 g/mol und der Kettenverlängerer (KV1) ausgewählt ist aus der Gruppe bestehend aus 1,3-Propandiol, 1,4-Butandiol und 1,6-Hexandiol,
    wobei das thermoplastische Polyurethan einen Hartphasenanteil von grösser 0,40 aufweist, wobei der Hartphasenanteil durch folgende Formel definiert ist:

$$Hartphasenanteil = \{\sum_{x=1}^{x}[(m_{KVx}/M_{KVx})*M_{Iso}+m_{KVx}]\}/m_{ges}$$

mit den folgenden Bedeutungen:

$M_{KVx}$: Molare Masse der Kettenverlängerers x in g/mol
$m_{KVx}$: Masse des Kettenverlängerers x in g
$M_{Iso}$: Molare Masse des verwendeten Isocyanates in g/mol
$m_{ges}$: Gesamtmasse aller Ausgangsstoffe in g
x: Anzahl der Kettenverlängerer.

**9.** Thermoplastisches Polyurethan gemäß Anspruch 8, wobei der Kettenverlängerer (KV1) 1,4-Butandiol ist.

**Claims**

**1.** A process for producing a ski boot or part of a ski boot, comprising the steps of

(i) providing a thermoplastic polyurethane (TPU-1) obtained or obtainable by reacting an isocyanate composition (IZ) containing MDI with a polyol composition (PZ),

wherein the polyol composition (PZ) contains at least one polyol (P1) and a chain extender (KV1), wherein the polyol (P1) is selected from polytetrahydrofurans having an average molecular weight Mn in the range from 1300 to 1700 g/mol and the chain extender (KV1) is selected from the group consisting of 1,3-propanediol, 1,4-butanediol and 1,6-hexanediol;

(ii) producing a ski boot or part of a ski boot from the thermoplastic polyurethane (TPU-1), wherein the thermoplastic polyurethane has a hard phase fraction of greater than 0.40, wherein the hard phase fraction is defined by the following formula:

$$Hard\ phase\ fraction = \{\sum_{x=1}^{x}[(m_{KVx}/M_{KVx})*M_{iso}+m_{KVx}]\}/m_{tot}$$

with the following definitions:

$M_{KVx}$: Molar mass of the chain extender x in g/mol
$m_{KVx}$: Mass of the chain extender x in g
$M_{iso}$: Molar mass of the employed isocyanate in g/mol
$m_{tot}$: Total mass of all starting materials in g
x: Number of chain extenders.

**2.** The process as claimed in claim 1, wherein the thermoplastic polyurethane (TPU-1) is processed by injection molding according to step (ii).

**3.** The process as claimed in either of claims 1 and 2, wherein the chain extender (KV1) is 1,4-butanediol.

**4.** A ski boot or part of a ski boot obtained or obtainable by a process as claimed in any of claims 1 to 3.

**5.** The ski boot or part of a ski boot as claimed in claim 4, wherein the thermoplastic polyurethane has a Charpy notched impact strength at -30°C according to DIN EN ISO 179-1/1 eA of greater than 10 kJ/m$^2$.

**6.** The use of a thermoplastic polyurethane (TPU-1) obtained or obtainable by reaction of an isocyanate composition (IZ) containing MDI with a polyol composition (PZ) for production of ski boots or parts of ski boots, wherein the polyol composition (PZ) contains at least one polyol (P1) and a chain extender (KV1), wherein the polyol (P1) is selected from polytetrahydrofurans having an average molecular weight Mn in the range from 1300 to 1700 g/mol and the chain extender (KV1) is selected from the group consisting of 1,3-propanediol, 1,4-butanediol and 1,6-hexanediol, and wherein the thermoplastic polyurethane has a hard phase fraction of greater than 0.40, wherein the hard phase fraction is defined by the following formula:

$$Hard\ phase\ fraction = \{\sum_{x=1}^{x}[(m_{KVx}/M_{KVx}) * M_{iso} + m_{KVx}]\}/m_{tot}$$

with the following definitions:

$M_{KVx}$: Molar mass of the chain extender x in g/mol
$m_{KVx}$: Mass of the chain extender x in g
$M_{iso}$: Molar mass of the employed isocyanate in g/mol
$m_{tot}$: Total mass of all starting materials in g
x: Number of chain extenders.

7. The use as claimed in claim 6, wherein the chain extender (KV1) is 1,4-butanediol.

8. A thermoplastic polyurethane (TPU-1) obtained or obtainable by reacting an isocyanate composition (IZ) containing MDI with a polyol composition (PZ),

wherein the polyol composition (PZ) contains at least one polyol (P1) and a chain extender (KV1),
wherein the polyol (P1) is selected from polytetrahydrofurans having an average molecular weight Mn in the range from 1300 to 1700 g/mol and the chain extender (KV1) is selected from the group consisting of 1,3-propanediol, 1,4-butanediol and 1,6-hexanediol, wherein the thermoplastic polyurethane has a hard phase fraction of greater than 0.40, wherein the hard phase fraction is defined by the following formula:

$$Hard\ phase\ fraction = \{\sum_{x=1}^{x}[(m_{KVx}/M_{KVx}) * M_{iso} + m_{KVx}]\}/m_{tot}$$

with the following definitions:

$M_{KVx}$: Molar mass of the chain extender x in g/mol
$m_{KVx}$: Mass of the chain extender x in g
$M_{iso}$: Molar mass of the employed isocyanate in g/mol
$m_{tot}$: Total mass of all starting materials in g
x: Number of chain extenders.

9. The thermoplastic polyurethane as claimed in claim 8, wherein the chain extender (KV1) is 1,4-butanediol.

**Revendications**

1. Procédé de fabrication d'une chaussure de ski ou d'une partie d'une chaussure de ski, comprenant les étapes

(i) mise à disposition d'un polyuréthane thermoplastique (TPU-1) obtenu ou pouvant être obtenu par transformation d'une composition d'isocyanate (IZ) contenant du MDI avec une composition de polyol (PZ),

la composition de polyol (PZ) contenant au moins un polyol (P1) et un agent d'allongement de chaîne (KV1), le polyol (P1) étant choisi parmi les polytétrahydrofurannes présentant un poids moléculaire moyen Mn dans la plage de 1300 à 1700 g/mole et l'agent d'allongement de chaîne (KV1) étant choisi dans le groupe constitué par le 1,3-propanediol, le 1,4-butanediol et le 1,6-hexanediol ;

(ii) fabrication d'une chaussure de ski ou d'une partie d'une chaussure de ski à partir du polyuréthane thermoplastique (TPU-1),

le polyuréthane thermoplastique présentant une proportion de phases dures supérieure à 0,40, la proportion de phases dures étant définie par la formule suivante :

$$proportion\ de\ phases\ dures = \{\sum_{x=1}^{x} [(m_{KVx}/M_{KVx}) * M_{Iso} + m_{KVx}]\}/m_{tot}$$

présentant les significations suivantes :

$M_{KVx}$ : masse molaire de l'agent d'allongement de chaîne x en g/mole
$m_{KVx}$ : masse de l'agent d'allongement de chaîne x en g
$M_{Iso}$ : masse molaire de l'isocyanate utilisé en g/mole
$m_{tot}$ : masse totale de toutes les substances de départ en g
x : nombre d'agents d'allongement de chaîne.

**2.** Procédé selon la revendication 1, le polyuréthane thermoplastique (TPU-1) selon l'étape (ii) étant mis en œuvre par moulage par injection.

**3.** Procédé selon l'une des revendications 1 à 2, l'agent d'allongement de chaîne (KV1) étant le 1,4-butanediol.

**4.** Chaussure de ski ou partie d'une chaussure de ski obtenu(e) ou pouvant être obtenu(e) selon un procédé selon l'une des revendications 1 à 3.

**5.** Chaussure de ski ou partie d'une chaussure de ski selon la revendication 4, le polyuréthane thermoplastique présentant une résistance au choc Charpy à -30°C selon la norme DIN EN ISO 179-1/1 eA supérieure à 10 kJ/m$^2$.

**6.** Utilisation d'un polyuréthane thermoplastique (TPU-1) obtenu ou pouvant être obtenu par transformation d'une composition d'isocyanate (IZ) contenant du MDI avec une composition de polyol (PZ), pour la fabrication de chaussures de ski ou de parties de chaussures de ski,

la composition de polyol (PZ) contenant au moins un polyol (P1) et un agent d'allongement de chaîne (KV1), le polyol (P1) étant choisi parmi les polytétrahydrofurannes présentant un poids moléculaire moyen Mn dans la plage de 1300 à 1700 g/mole et l'agent d'allongement de chaîne (KV1) étant choisi dans le groupe constitué par le 1,3-propanediol, le 1,4-butanediol et le 1,6-hexanediol et
le polyuréthane thermoplastique présentant une proportion de phases dures supérieure à 0,40, la proportion de phases dures étant définie par la formule suivante :

$$proportion\ de\ phases\ dures = \{\sum_{x=1}^{x} [(m_{KVx}/M_{KVx}) * M_{Iso} + m_{KVx}]\}/m_{tot}$$

présentant les significations suivantes :

$M_{KVx}$ : masse molaire de l'agent d'allongement de chaîne x en g/mole
$m_{KVx}$ : masse de l'agent d'allongement de chaîne x en g
$M_{Iso}$ :masse molaire de l'isocyanate utilisé en g/mole
$m_{tot}$ : masse totale de toutes les substances de départ en g
x : nombre d'agents d'allongement de chaîne.

**7.** Utilisation selon la revendication 6, l'agent d'allongement de chaîne (KV1) étant le 1,4-butanediol.

**8.** Polyuréthane thermoplastique (TPU-1) obtenu ou pouvant être obtenu par transformation d'une composition d'isocyanate (IZ) contenant du MDI avec une composition de polyol (PZ),

la composition de polyol (PZ) contenant au moins un polyol (P1) et un agent d'allongement de chaîne (KV1), le polyol (P1) étant choisi parmi les polytétrahydrofurannes présentant un poids moléculaire moyen Mn dans la plage de 1300 à 1700 g/mole et l'agent d'allongement de chaîne (KV1) étant choisi dans le groupe constitué par le 1,3-propanediol, le 1,4-butanediol et le 1,6-hexanediol,
le polyuréthane thermoplastique présentant une proportion de phases dures supérieure à 0,40, la proportion de phases dures étant définie par la formule suivante :

$$proportion\ de\ phases\ dures = \{\sum_{x=1}^{x} [(m_{KVx}/M_{KVx}) * M_{Iso} + m_{KVx}]\}/m_{tot}$$

présentant les significations suivantes :

$M_{KVx}$ : masse molaire de l'agent d'allongement de chaîne x en g/mole
$m_{KVx}$ : masse de l'agent d'allongement de chaîne x en g
$M_{Iso}$ : masse molaire de l'isocyanate utilisé en g/mole
$m_{tot}$ : masse totale de toutes les substances de départ en g
x : nombre d'agents d'allongement de chaîne.

9. Polyuréthane thermoplastique selon la revendication 8, l'agent d'allongement de chaîne (KV1) étant le 1,4-butane-diol.

**EP 3 802 653 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007118827 A1
- WO 2017079188 A1
- WO 2015064140 A1
- WO 2017144502 A1
- WO 2006029853 A1
- EP 0922552 A1
- DE 10103424 A1
- WO 2006072461 A1

**In der Beschreibung aufgeführte Nicht-Patentliteratur**

- **VIEWEG** ; **HÖCHTLEN**. Kunststoffhandbuch. Carl Hanser Verlag, 1966, vol. VII, 103-113